# DEMANDE DE BREVET EUROPEEN

(11) **EP 4 254 250 A1**
(43) Date de publication de la demande: **04.10.2023**
(21) Numéro de dépôt: 23162553.4
(22) Date de dépôt: 17.03.2023
(51) Int. Cl.: G06F 21/84

(54) **MÉTHODE ET APPAREIL POUR DÉTECTER UN SPECTATEUR D'APPAREIL MOBILE BASÉE SUR DES DONNÉES DE PROFONDEUR**

(30) Priorité: 01.04.2022 FR 2203008
(71) Demandeur: STMICROELECTRONICS (GRENOBLE 2) SAS, 38000 Grenoble (FR)
(72) Inventeur: LEMARCHAND, Olivier, 38100 GRENOBLE (FR); FELTER, Pierre-Loic, 38000 GRENOBLE (FR)
(74) Mandataire: Casalonga

(57) **Abrégé**

Selon un aspect, il est proposé un système informatique comportant :
- un écran d'affichage (SCR),
- un capteur temps de vol (TOF) disposé à proximité de l'écran (SCR) et configuré pour acquérir des informations de distance de plusieurs zones d'une scène située face à l'écran dans un champ de vue du capteur temps de vol,
- une unité de traitement (UT) configurée pour déterminer la présence d'un utilisateur (USR) du système informatique dans ladite scène et pour détecter une présence d'au moins un individu (USR) autre que l'utilisateur, à partir des informations de distance acquises par le capteur temps de vol (TOF), et pour informer l'utilisateur (USR) lorsqu'une présence d'au moins un individu (INT1, INT2) autre que l'utilisateur (USR) est détectée.

## Description

Des modes de réalisation et de mise en oeuvre concernent les systèmes informatiques dotés d'écran d'affichage, et plus particulièrement la préservation d'une intimité concernant les activités d'un utilisateur d'un système informatique affichées sur son écran.

Certains systèmes informatiques, tels que les ordinateurs personnels de bureau ou portables, les tablettes et les téléphones multifonction (« smartphone »), sont dotés d'écran. Un écran est un périphérique de sortie qui affiche des informations sous forme d'images ou de texte. Ces informations peuvent alors être visionnées par un utilisateur humain du système informatique.

L'utilisateur du système informatique peut souhaiter préserver son intimité sur ses activités effectuées sur le système informatique, notamment pour des raisons de confidentialité. L'utilisateur du système informatique peut ainsi souhaiter s'assurer qu'aucune autre personne ne puisse visualiser les informations affichées par l'écran.

Une solution connue est d'utiliser un filtre de confidentialité appliqué sur l'écran du système informatique. Un tel filtre de confidentialité est une protection permettant de restreindre la vision des informations affichées de part et d'autre d'un axe de vision de l'utilisateur du système informatique. Toutefois, un tel filtre de confidentialité présente l'inconvénient de ne pas empêcher un intrus situé derrière l'utilisateur face à l'écran de visualiser les informations affichées sur l'écran.

Par ailleurs, il est possible de doter ces systèmes informatiques d'une caméra. Cette caméra est généralement utilisée pour filmer l'utilisateur, notamment dans le cadre de visioconférences. Néanmoins, la caméra peut également être utilisée pour préserver l'intimité de l'utilisateur. En effet, le système informatique peut utiliser la caméra pour détecter une présence d'intrus situé derrière l'utilisateur afin d'alerter l'utilisateur lorsqu'un intrus est détecté. Le système informatique met alors en oeuvre des algorithmes de traitement d'images pour détecter la présence d'un intrus dans les images acquises par la caméra. Toutefois, ces algorithmes peuvent être complexes et leur mise en oeuvre peut induire une consommation élevée d'énergie. En outre, la caméra doit être constamment allumée pour acquérir des images en continu. Lorsque le système informatique est autonome (ordinateur portable, tablette, ou téléphone multifonction), la consommation d'énergie requise pour la mise en oeuvre de l'algorithme peut engendrer une baisse importante de l'autonomie en énergie du système informatique et peut même nécessiter un branchement du système informatique sur secteur. L'utilisation d'un tel algorithme peut donc être contraignante pour l'utilisateur du système informatique. Par ailleurs, certains utilisateurs peuvent considérer comme intrusive une utilisation de la caméra en continue. À ce titre, certains utilisateurs utilisent des clapets mécaniques sur la caméra permettant d'éviter une mise en oeuvre de la caméra non désirée par l'utilisateur. Les algorithmes permettant de détecter un intrus peuvent reposer sur de la détection de visages. Or, de tels algorithmes de détection de visage ne sont pas toujours efficaces, notamment lorsque le visage est au moins partiellement caché, par exemple par un masque chirurgical.

Il existe donc un besoin de proposer une solution permettant de détecter des individus situés derrière l'utilisateur d'un système informatique de manière simple et non intrusive pour l'utilisateur.

Selon un aspect, il est proposé un système informatique comportant :
- un écran d'affichage,
- un capteur temps de vol disposé à proximité de l'écran et configuré pour acquérir des informations de distance de plusieurs zones d'une scène située face à l'écran dans un champ de vue du capteur temps de vol,
- une unité de traitement configurée pour déterminer la présence d'un utilisateur du système informatique dans ladite scène et pour détecter une présence d'au moins un individu autre que l'utilisateur -notamment derrière l'utilisateur-, à partir des informations de distance acquises par le capteur temps de vol, et pour informer l'utilisateur lorsqu'une présence d'au moins un individu autre que l'utilisateur -notamment derrière l'utilisateur- est détectée.

Un tel système informatique présente l'avantage d'utiliser un capteur temps de vol peu consommateur en énergie par rapport à une caméra pour détecter des individus autre que l'utilisateur du système informatique. En outre, l'utilisation d'un capteur temps de vol permet d'obtenir une préservation de l'intimité pour l'utilisateur. Une telle solution n'est également pas limitée à certaines conditions de luminosités comparée à une solution utilisant une caméra qui nécessite généralement un minimum de luminosité. En outre, le capteur temps de vol permet de détecter des individus dont le visage est au moins partiellement caché. L'utilisation du capteur temps de vol permet de détecter des individus même s'ils ne sont pas complètement dans le champ de vue du capteur temps de vol. En outre, le capteur de temps de vol est capable de distinguer l'utilisateur principal des individus situés derrière lui, de sorte que seuls ces individus peuvent être détectés comme des intrus potentiels, évitant ainsi que l'utilisateur principal ne soit confondu avec des intrus. Le capteur temps de vol présente également l'avantage de ne pas être placé derrière un clapet mécanique pouvant être utilisé sur une caméra du système informatique.

Dans un mode de réalisation avantageux, l'unité de traitement est configurée pour déterminer la présence d'éléments de la scène dans le champ de vue du capteur temps de vol à partir des informations de distance acquises par le capteur temps de vol et pour déterminer si certains de ces éléments correspondent à des individus autres que l'utilisateur.

Avantageusement, l'unité de traitement est configurée pour déterminer qu'un élément correspond à un individu autre que l'utilisateur si :
- l'élément n'est pas l'élément le plus proche du capteur temps de vol, et si
- l'élément est mobile entre plusieurs acquisitions successives du capteur temps de vol, et si
- l'élément est situé à une distance, par rapport au capteur temps de vol, inférieure ou égale à une distance maximale définie par l'utilisateur, et si

- l'élément est apparu dans la scène après l'utilisateur du système informatique, et si
- l'élément est resté dans la scène plus longtemps qu'une durée définie par l'utilisateur,
ou si l'élément est apparu dans la scène à une distance, par rapport au capteur temps de vol, proche d'une distance d'un individu précédemment détecté.

De préférence, l'unité de traitement est configurée pour filtrer les éléments détectés avant de déterminer si les éléments filtrés correspondent à des individus, les éléments filtrés correspondant aux éléments suffisamment séparés des autres éléments et situés à une distance du capteur temps de vol inférieure à une distance donnée.

Dans un mode de réalisation avantageux, le capteur temps de vol comporte une matrice de diodes à effet d'avalanche déclenchées par un photon individuel.

Selon un autre aspect, il est proposé un procédé de détection d'au moins un individu autre qu'un utilisateur d'un système informatique comportant un écran d'affichage -notamment derrière l'utilisateur-, le procédé comportant :
- au moins une acquisition, par un capteur temps de vol disposé à proximité de l'écran, d'informations de distance de plusieurs zones d'une scène située face à l'écran dans un champ de vue du capteur temps de vol,
- une détermination de la présence d'un utilisateur du système informatique dans ladite scène et une détection d'une présence dudit au moins un individu autre que l'utilisateur -notamment derrière l'utilisateur-, à partir des informations de distance acquises par le capteur temps de vol,
- une notification à l'utilisateur lorsqu'une présence d'au moins un individu autre que l'utilisateur -notamment derrière l'utilisateur- est détectée.

Dans un mode de mise en oeuvre avantageux, le procédé comprend une détermination de la présence d'éléments de la scène dans le champ de vue du capteur temps de vol à partir des informations de distance acquises par le capteur temps de vol et une détermination si certains de ces éléments correspondent à des individus autres que l'utilisateur.

De préférence, la présence d'un individu autre que l'utilisateur est déterminée si :
- un élément n'est pas l'élément le plus proche du capteur temps de vol, et si
- cet élément est mobile entre plusieurs acquisitions successives du capteur temps de vol, et si
- cet élément est situé à une distance, par rapport au capteur temps de vol, inférieure ou égale à une distance maximale définie par l'utilisateur, et si
- cet élément est apparu dans la scène après l'utilisateur du système informatique, et si
- cet élément est resté dans la scène plus longtemps qu'une durée définie par l'utilisateur,
ou si un élément est apparu dans la scène à une distance, par rapport au capteur temps de vol, proche d'une distance d'un individu précédemment détecté.

Avantageusement, le procédé comporte un filtrage des éléments détectés avant de déterminer si les éléments filtrés correspondent à des individus, les éléments filtrés correspondant aux éléments suffisamment séparés des autres éléments et situés à une distance du capteur temps de vol inférieure à une distance donnée.

Dans un mode de mise en oeuvre avantageux, l'acquisition des informations de distance est effectuée par un capteur temps de vol comportant une matrice de diodes à effet d'avalanche déclenchées par un photon individuel.

D'autres avantages et caractéristiques de l'invention apparaîtront à l'examen de la description détaillée de modes de réalisation, nullement limitatifs, et des dessins annexés sur lesquels :
[Fig 1]
[Fig 2]

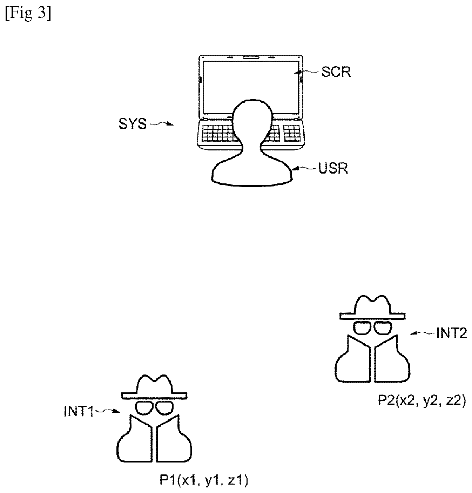

[Fig 3] illustrent des modes de réalisation et de mise en oeuvre de l'invention.

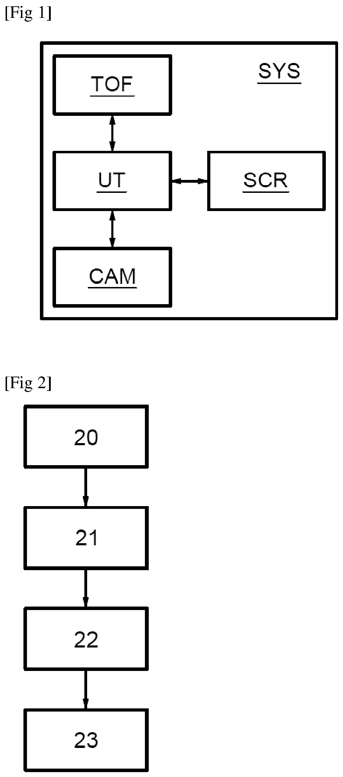

La figure 1 illustre un mode de réalisation d'un système informatique SYS. Le système informatique SYS peut être un ordinateur portable, une tablette, un téléphone multifonction par exemple.

Le système informatique SYS comporte une unité de traitement UT, une mémoire et un écran SCR. L'unité de traitement UT peut être un processeur ou un microprocesseur par exemple.

L'écran SCR peut être un écran LCD, un écran OLED. L'écran SCR est configuré pour afficher des informations pouvant être visualisées par l'utilisateur.

Le système informatique SYS comporte également un capteur temps de vol TOF. Le capteur temps de vol TOF comporte une matrice de diodes à effet d'avalanche déclenchées par un photon individuel, dites diodes SPAD. Par exemple, le capteur temps de vol TOF peut être un capteur VL53L5CX commercialisé par la société STMicroelectronics.

Le capteur temps de vol TOF est placé à proximité de l'écran SCR et est orienté de façon à pouvoir acquérir des données de distance dans une scène située face à l'écran SCR dans le champ de vu du capteur temps de vol TOF. Par exemple, le capteur temps de vol TOF peut être placé sur une bordure de l'écran. Le capteur temps de vol TOF est configuré pour évaluer des distances d'éléments pouvant être présents dans la scène par rapport au capteur temps de vol TOF. Par exemple, le capteur temps de vol TOF est configuré pour déterminer une distance entre l'utilisateur du système informatique SYS le capteur temps de vol TOF.

Le capteur temps de vol TOF est multizone. En d'autres termes, le capteur temps de vol TOF est configuré pour sectionner son champ de vue du le capteur TOF en plusieurs zones. Chaque zone est donc délimitée horizontalement et verticalement. Par exemple, le capteur temps de vol TOF peut séctionner son champ de vue en soixante-quatre zones (8x8). Le capteur temps de vol TOF est configuré pour déterminer une distance pour chaque zone de son champ de vue. Le capteur temps de vol TOF permet ainsi de détecter une présence d'élément(s) dans les différentes zones de son champ de vue.

Le capteur temps de vol TOF est utilisé pour détecter la présence de l'utilisateur en face de l'écran. En particulier, l'unité de traitement UT est configurée pour déterminer qu'un élément présent dans la scène correspond à l'utilisateur à partir des données générées par le capteur temps de vol. Plus particulièrement, un élément peut être considéré comme l'utilisateur lorsqu'il remplit plusieurs critères. Par exemple, un élément peut être considéré comme utilisateur lorsqu'il est situé à une distance comprise dans une plage prédéfinie par rapport au capteur temps de vol TOF.

Le capteur temps de vol TOF est également utilisé pour détecter la présence d'individus derrière l'utilisateur en face de l'écran. En particulier, l'unité de traitement UT est configurée pour déterminer qu'un ou plusieurs élément(s) présent dans la scène correspond à un ou plusieurs individus à partir des données générées par le capteur temps de vol TOF. Plus particulièrement, un élément peut être considéré comme un individu derrière l'utilisateur lorsqu'il remplit différents critères.

Un premier critère permettant de considérer un élément comme un tel individu est que l'élément ne doit pas être l'élément le plus proche du capteur temps de vol TOF.

Un deuxième critère possible est que l'élément doit être mobile entre plusieurs acquisitions successives du capteur temps de vol.

Un troisième critère possible est que la distance de l'élément par rapport au capteur temps de vol TOF doit être inférieure ou égale à une distance maximale définie par l'utilisateur. L'utilisateur peut définir différentes distances maximales pour différentes parties de la scène. Par exemple, l'utilisateur peut définir une distance maximale pour une partie gauche de la scène et une distance maximale pour une partie droite de la scène. La distance de l'élément est alors comparée à la distance maximale définie pour la partie de la scène dans laquelle l'élément se situe.

Un quatrième critère possible est que l'élément doit être apparu dans la scène après l'utilisateur du système informatique SYS.

Un cinquième critère possible est que l'élément doit rester dans la scène plus longtemps qu'une durée définie par l'utilisateur par exemple de l'ordre de deux secondes.

Il est également possible de déterminer qu'un élément est un individu derrière l'utilisateur s'il vient d'apparaître dans la scène et que sa distance par rapport au capteur temps de vol TOF est proche de la distance d'un individu précédemment détecté.

L'unité de traitement UT peut être configurée pour filtrer les éléments détectés avant de détecter la présence d'un individu derrière l'utilisateur parmi ces différents éléments. Pour ce faire, l'unité de traitement est configurée pour sélectionner au maximum un nombre prédéfini d'éléments. En particulier, l'unité de traitement UT est configurée pour sélectionner des éléments séparés les uns des autres, par exemple de cinquante centimètres, et qui sont les plus proches du capteur temps de vol TOF.

Après détection d'un individu à l'aide du capteur temps de vol, et si l'utilisateur le permet, l'unité de traitement peut être configurée pour utiliser une caméra CAM du système informatique pour acquérir des images de la scène devant l'écran afin d'exécuter un algorithme de traitement d'image, notamment de détection de visage, pour vérifier si l'élément détecté à l'aide du capteur temps de vol correspond bien à un individu ayant son visage dirigé vers l'écran du système informatique. L'utilisation de la caméra permet d'éviter des faux-positifs dans lesquels le capteur temps de vol détecte un individu qui est dos à l'écran et qui ne présente donc aucun risque pour la préservation de l'intimité de l'utilisateur du système informatique.

L'unité de traitement UT est également configurée pour effectuer un signalement à l'utilisateur, notamment via l'écran SCR, lorsqu'un individu autre que l'utilisateur est détecté dans le champ de vision du capteur temps de vol TOF.

Un tel système informatique SYS présente l'avantage d'utiliser un capteur temps de vol TOF peu consommateur en énergie par rapport à une caméra pour détecter des individus derrière l'utilisateur du système informatique SYS. En outre, l'utilisation d'un capteur temps de vol TOF permet d'obtenir un sentiment de préservation de l'intimité pour l'utilisateur. Une telle solution n'est également pas limitée à certaines conditions de luminosités comparée à une solution utilisant une caméra qui nécessite généralement un minimum de luminosité. En outre, le capteur temps de vol TOF permet de détecter des individus dont le visage est au moins partiellement caché. L'utilisation du capteur temps de vol permet de détecter des individus même s'ils ne sont pas complètement dans le champ de vue du capteur temps de vol TOF. En outre, le capteur de temps de vol TOF est capable de distinguer l'utilisateur principal des individus situés derrière lui, de sorte que seuls ces individus peuvent être détectés comme des intrus potentiels, évitant ainsi que l'utilisateur principal ne soit confondu avec des intrus. Le capteur temps de vol TOF présente également l'avantage de ne pas être placé derrière un clapet mécanique pouvant être utilisé sur une caméra du système informatique.

La figure 2 illustre un mode de mise en oeuvre d'un procédé de détection d'individu derrière un utilisateur d'un système informatique. Ce procédé est mis en oeuvre dans une scène dans laquelle l'utilisateur peut se positionner, notamment en face de l'écran du système informatique. Le procédé de détection peut être mis en oeuvre par un système informatique tel que décrit précédemment. Le procédé comporte des étapes pouvant être répétées de façon à permettre un suivi en continu des individus pouvant apparaître derrière l'utilisateur.

En particulier, le procédé comporte une étape 20 d'acquisition dans lequel le capteur temps de vol multizone mesure des distances des différents éléments de la scène, puis transmet ces mesures de distance à l'unité de traitement.

Ensuite, le procédé comporte une étape 21 de filtration dans laquelle l'unité de traitement filtre certains éléments de la scène détectés par le capteur temps de vol.

Le procédé comporte finalement une étape 22 de détection dans laquelle l'unité de traitement analyse les différents éléments détectés et filtrés afin de déterminer si certains de ces éléments correspondent à l'utilisateur du système informatique ou à des individus autre que cet utilisateur. Pour ce faire, l'unité de traitement vérifie les critères décrits précédemment en relation avec la figure 1 afin d'évaluer si un élément correspond à un individu. Si l'utilisateur le permet, l'unité de traitement peut utiliser la caméra du système informatique pour acquérir des images de la scène devant l'écran avant d'exécuter un algorithme de traitement d'image, notamment de détection de visage, pour vérifier si l'élément détecté à l'aide du capteur temps de vol correspond bien à un individu ayant son visage dirigé vers l'écran du système informatique. L'utilisation de la caméra permet d'éviter des faux-positifs dans lesquels le capteur temps de vol détecterait un individu qui serait dos à l'écran et qui ne présenterait donc aucun risque pour la préservation de l'intimité de l'utilisateur du système informatique.

Si le procédé détecte un individu, le procédé comporte ensuite une étape 23 de signalement dans laquelle l'unité de traitement peut signaler à l'utilisateur la présence de cet individu en affichant un message d'alerte sur l'écran du système informatique par exemple.

La figure 3 illustre un exemple de détection d'individus INT1, INT2 derrière un utilisateur USR d'un système informatique SYS doté d'un écran SCR. Les individus INT1, INT2 sont détectés respectivement à des positions P1(x1,y1,z1) et P2(x2, y2, z2) dans le champ de vue d'un capteur temps de vol du système informatique SYS.

## Revendications

1. Système informatique comportant :
- un écran d'affichage (SCR),
- un capteur temps de vol (TOF) disposé à proximité de l'écran (SCR) et configuré pour acquérir des informations de distance de plusieurs zones d'une scène située face à l'écran dans un champ de vue du capteur temps de vol,
- une unité de traitement (UT) configurée pour déterminer la présence d'un utilisateur (USR) du système informatique dans ladite scène et pour détecter une présence d'au moins un individu (USR) autre que l'utilisateur, à partir des informations de distance acquises par le capteur temps de vol (TOF), et pour informer l'utilisateur (USR) lorsqu'une présence d'au moins un individu (INT1, INT2) autre que l'utilisateur (USR) est détectée.

2. Système selon la revendication 1, dans lequel l'unité de traitement (UT) est configurée pour déterminer la présence d'éléments de la scène dans le champ de vue du capteur temps de vol (TOF) à partir des informations de distance acquises par le capteur temps de vol et pour déterminer si certains de ces éléments correspondent à des individus autres que l'utilisateur.

3. Système selon la revendication 2, dans lequel l'unité de traitement (UT) est configurée pour déterminer qu'un élément correspond à un individu autre que l'utilisateur si :
- l'élément n'est pas l'élément le plus proche du capteur temps de vol (TOF), et si
- l'élément est mobile entre plusieurs acquisitions successives du capteur temps de vol (TOF), et si
- l'élément est situé à une distance, par rapport au capteur temps de vol (TOF), inférieure ou égale à une distance maximale définie par l'utilisateur, et si
- l'élément est apparu dans la scène après l'utilisateur (USR) du système informatique, et si
- l'élément est resté dans la scène plus longtemps qu'une durée définie par l'utilisateur (USR),
ou si l'élément est apparu dans la scène à une distance, par rapport au capteur temps de vol (TOF), proche d'une distance d'un individu (INT1, INT2) précédemment détecté.

4. Système selon l'une quelconque des revendications 2 ou 3, dans lequel l'unité de traitement est configurée pour filtrer les éléments détectés avant de déterminer si les éléments filtrés correspondent à des individus, les éléments filtrés correspondant aux éléments suffisamment séparés des autres éléments et situés à une distance du capteur temps de vol (TOF) inférieure à une distance donnée.

5. Système selon l'une des revendications 1 à 4, dans lequel le capteur temps de vol (TOF) comporte une matrice de diodes à effet d'avalanche déclenchées par un photon individuel.

6. Procédé de détection d'au moins un individu autre qu'un utilisateur d'un système informatique doté d'un écran d'affichage (SCR), le procédé comportant :
- au moins une acquisition (20), par un capteur temps de vol (TOF) disposé à proximité de l'écran, d'informations de distance de plusieurs zones d'une scène située face à l'écran dans un champ de vue du capteur temps de vol,
- une détermination (22) de la présence d'un utilisateur (USR) du système informatique dans ladite scène et une détection d'une présence dudit au moins un individu (USR) autre que l'utilisateur, à partir des informations de distance acquises par le capteur temps de vol,
- une notification (23) à l'utilisateur (USR) lorsqu'une présence d'au moins un individu (INT1, INT2) autre que l'utilisateur (USR) est détectée.

7. Procédé selon la revendication 6, comprenant une détermination de la présence d'éléments de la scène dans le champ de vue du capteur temps de vol (TOF) à partir des informations de distance acquises par le capteur temps de vol et une détermination si certains de ces éléments correspondent à des individus autres que l'utilisateur.

8. Procédé selon la revendication 7, dans lequel la présence d'un individu autre que l'utilisateur est déterminée si :
- un élément n'est pas l'élément le plus proche du capteur temps de vol (TOF), et si
- cet élément est mobile entre plusieurs acquisitions successives du capteur temps de vol (TOF), et si
- cet élément est situé à une distance, par rapport au capteur temps de vol (TOF), inférieure ou égale à une distance maximale définie par l'utilisateur, et si
- cet élément est apparu dans la scène après l'utilisateur (USR) du système informatique, et si
- cet élément est resté dans la scène plus longtemps qu'une durée définie par l'utilisateur (USR),
ou si un élément est apparu dans la scène à une distance, par rapport au capteur temps de vol (TOF), proche d'une distance d'un individu (INT1, INT2) précédemment détecté.

9. Procédé selon l'une quelconque des revendications 7 ou 8, comportant un filtrage des éléments détectés avant de déterminer si les éléments filtrés correspondent à des individus, les éléments filtrés correspondant aux éléments suffisamment séparés des autres éléments et situés à une distance du capteur temps de vol (TOF) inférieure à une distance donnée.

10. Procédé selon l'une des revendications 6 à 9, dans lequel l'acquisition des informations de distance est effectuée par un capteur temps de vol (TOF) comportant une matrice de diodes à effet d'avalanche déclenchées par un photon individuel.
